# EUROPÄISCHE PATENTANMELDUNG

(11) **EP 4 450 212 A1**
(43) Veröffentlichungstag der Anmeldung: **23.10.2024**
(21) Anmeldenummer: 24165609.9
(22) Anmeldetag: 22.03.2024
(51) Int. Cl.: B23K 26/38, B23K 37/04, B23Q 1/03, B25B 11/00, B23K 103/10, B23K 103/12, B23K 103/00, B23Q 3/08

(54) **BEARBEITUNGSVORRICHTUNG UND VERFAHREN ZUM BEARBEITEN VON FLACHMATERIAL**

(30) Priorität: 21.04.2023 DE 102023110266
(71) Anmelder: SCHUNK Electronic Solutions GmbH, 78112 St. Georgen (DE)
(72) Erfinder: Flaig, Sven, 78078 Niedereschach (DE); Kiebe, Mattias, 78532 Tuttlingen (DE); Ringwald, Stefan, 79215 Elzach (DE)
(74) Vertreter: DREISS Patentanwälte PartG mbB

(57) **Zusammenfassung**

Die Erfindung betrifft einen Bearbeitungsvorrichtung (10) zur Bearbeitung von entlang einer Materialebene (11) erstreckenden Flachmaterial (12), die Bearbeitungsvorrichtung (10) umfassend: wenigstens eine Haltevorrichtung (200) zum Halten des Flachmaterials (12), wenigstens eine Spannvorrichtung (400) zum Festsetzen des Flachmaterials (12) und zum Spannen des Flachmaterials (12) entlang der Materialebene (11), wenigstens eine Laservorrichtung (600) zum Schneiden von wenigstens einem Schnittstück (1) aus dem Flachmaterial (12), wobei die Haltevorrichtung (200) derart ausgebildet ist, dass nach dem Laserschnitt das wenigstens eine Schnittstück (1) durch die Haltevorrichtung (200) gehalten wird; sowie ein Verfahren.

## Beschreibung

Die Erfindung betrifft eine Bearbeitungsvorrichtung und ein Verfahren zum Bearbeiten von Flachmaterial.

In der Elektronikindustrie und insbesondere bei der Herstellung von Akkus für die E-Mobilität werden Flachmaterialien, insbesondere Anoden- und Kathodenfolien, benötigt.

Im Sinne dieser Anmeldung sind unter Flachmaterialien ein- oder mehrlagige Schichten oder Folien zu verstehen, wobei die Schichten oder Folien eine wesentlich größere Längs- und Quererstreckung als eine Dicke aufweisen. Ferner ist das Flachmaterial biegeschlaf ausgebildet, sodass das Flachmaterial ohne Stützung über die Längs- und Quererstreckung wesentlich von einer ebenen Form abweicht. Ferner ist das Flachmaterial zumindest im Wesentlichen gasundurchlässig, sodass das Flachmaterial ansaugbar ist. Ferner ist das Flachmaterial oder dessen Schichten monolithisch ausgebildet. Die Flachmaterialien können insbesondere Kunststoff oder Metall umfassen, wobei metallbeschichtete Kunststoffe oder kunststoffbeschichtete Metalle ebenfalls denkbar sind. Das Flachmaterial kann als ein Flachmaterialbandabschnitt ausgebildet sein. Bei der Flachmaterial kann es sich z.B. um eine Stromsammelfolie mit den Maßen 200mm x 280mm handeln, wobei die Folie Graphit umfasst und mit Aluminium oder Kupfer beschichtet ist.

Die Handhabung, Fixierung und Bearbeitung solcher Flachmaterialien, insbesondere das Herstellen von Schnittstücken aus dem Flachmaterial, sind aufgrund der dünnen und biegeschlafen Ausbildung des Flachmaterials komplex.

Das Flachmaterial stellt ein Halbzeug dar, aus dem wenigstens ein Schnittstück hergestellt wird. Die Schnittstücke weisen die für den Anwendungsfall erforderliche äußere Kontur auf und sind in Bezug auf die Längs- und Quererstreckung kleiner als das Flachmaterial ausgebildet. Der restliche Teil des Flachmaterials der nicht den Schnittstücken zugeordnet ist, wird als Verschnitt bezeichnet.

Demnach liegt der vorliegenden Erfindung die Aufgabe zugrunde, ein Schnittstück aus einem Flachmaterial sicher, zuverlässig und reproduzierbar herzustellen.

Die der Erfindung zugrundeliegende Aufgabe wird durch eine Bearbeitungsvorrichtung zur Bearbeitung von entlang einer Materialebene erstreckenden Flachmaterial mit den Merkmalen des Anspruchs 1 gelöst. Die Bearbeitungsvorrichtung weist wenigstens eine Haltevorrichtung zum Halten des Flachmaterials auf, wenigstens eine, insbesondere zur Haltevorrichtung separat ausgebildete, Spannvorrichtung zum Festsetzen des Flachmaterials und zum Spannen des Flachmaterials entlang der Materialebene auf. Beim Spannen soll eine innere Spannung innerhalb des Flachmaterials aufgebaut werden, welche sich in der Materialebene erstreckt, wobei das Spannen der biegeschlafen Ausbildung des Flachmaterials entgegenwirken soll. So sollte das Flachmaterial sicher bearbeitet werden können und insbesondere ungewollte Verwerfungen oder Überlappungen im Flachmaterial sollen verhindert werden.

Zudem ist wenigstens eine Laservorrichtung zum Schneiden von wenigstens einem Schnittstück aus dem Flachmaterial vorgesehen. Im Bearbeitungszustand erstreckt sich die Materialebene des Flachmaterials entlang einer x-Achse (Längserstreckung) und entlang einer y-Achse (Quererstreckung), wobei die Dicke des Flachmaterials entlang einer senkrecht zur Materialebene verlaufenden z-Achse verläuft. Die Laservorrichtung ist derart eingerichtet, dass ein durch die Laservorrichtung emittierter Laserstrahl auf das Flachmaterial gerichtet ist und es an einem Auftreffpunkt zu einem Energieeintrag in das Flachmaterial kommt, sodass das Flachmaterial an dem Auftreffpunkt geschnitten wird. Die Laservorrichtung ist derart eingerichtet, dass der Laserstrahl über einen Arbeitsbereich verfahrbar ist, der sich über einen wesentlichen Teil des Flachmaterials erstreckt. Beim Schneiden kann der Laser die gesamte Kontur des Schnittstücks abfahren oder alternativ nur einen wesentlichen Teil der Kontur des Schnittstücks abfahren, wobei im Anschluss der nicht geschnittene Teil anderweitig getrennt werden muss, um das Schnittstück vom Verschnitt vollständig zu lösen. Aufgrund des Schneidens des Flachmaterials kommt es zu keiner mechanischen Belastung des Flachmaterials, wie z.B. beim Schneiden, Sägen oder Stanzen. Die thermische Belastung ist vernachlässigbar. Es ist denkbar, dass zum Schutz der Umgebung der umgebenden Komponenten ein Laserschutz vorgesehen ist, der den Arbeitsbereich des Laserstrahls umgibt und einer Reflektion des Laserstrahls entgegenwirkt.

Ferner ist die Haltevorrichtung derart ausgebildet, dass nach dem Laserschnitt, also nachdem das Schnittstück und der Verschnitt bzw. deren Schichten nicht mehr monolithisch ausgebildet sind, zumindest das Schnittstück durch die Haltevorrichtung gehalten wird. Demnach verbleibt trotz Laserschnitt das Schnittstück weiterhin in einer definierten Position, sodass das anschließende Greifen und Entnehmen ermöglicht oder erleichtert wird.

Vorzugsweise ist die Haltevorrichtung als eine Unterdruck-Haltvorrichtung zum Ansaugen des Flachmaterials ausgebildet. Die Haltevorrichtung weist vorteilhafterweise Düsen zum Ausbilden des Unterdrucks auf. Die Düsen sind derart angeordnet, dass die Düsen das Flachmaterial und insbesondere die Schnittstücke ansaugen. Die Haltevorrichtung ist vorzugsweise derart ausgebildet, dass das Flachmaterial auf die Haltevorrichtung auflegbar ist. In dem Fall wird das Flachmaterial von unten angesaugt und so in einer definierten Position gehalten.

Ferner ist es denkbar, dass die Halte- und/oder die Spannvorrichtung von oben zugänglich sind, sodass das Flachmaterial von oben auf die Haltevorrichtung und/oder in die Spannvorrichtung gelegt werden kann. Die Laserstrahlrichtung ist von der Laservorrichtung zur Haltevorrichtung gerichtet. Demnach bedeutet "von oben" aus der Richtung der Laservorrichtung kommend bzw. in der Laserstrahlrichtung gerichtet.

Es ist vorteilhaft, wenn die Spannvorrichtung wenigstens zwei gegenüberliegende Paare von Spannbacken zum Festsetzen und/oder zum Spannen jeweils einer Seite des Flachmaterials aufweist. Die Spannvorrichtung ist vorzugsweise derart ausgebildet, dass mittels des ersten Paars von Spannbacken eine erste Seite des Flachmaterials greifbar ist und mittels des zweiten Paars von Spannbacken eine zweite Seite des Flachmaterials greifbar ist. Im gespannten Zustand ist das Flachmaterial zwischen den Paaren von Spannbacken angeordnet. Die Spannvorrichtung und/oder die Spannbacken sind derart ausgebildet, dass beim Festsetzen das Flachmaterial gleichzeitig das Flachmaterial gespannt wird und/oder dass nach dem Festsetzen die Spannbacken entlang der x-Achse von dem Flachmaterial wegverlagert werden, um ein Spannen des Flachmaterials zu erzielen. Die Spannvorrichtung, insbesondere die Paare von Spannbacken, sind vorzugsweise außerhalb des Arbeitsbereichs der Laservorrichtung angeordnet, sodass der Laserstrahl nur zwischen den Spannvorrichtungen verfährt.

Eine vorteilhafte Weiterentwicklung der Erfindung sieht vor, dass die Laservorrichtung wenigstens entlang der x-Achse und der y-Achse verlagerbar ist. Die x-Achse und die y-Achse verlaufen parallel zur Materialebene, wenn das Flachmaterial in der Spannvorrichtung festgesetzt ist und/oder auf der Haltevorrichtung abgelegt ist. Es ist ferner denkbar, dass die Laservorrichtung entlang der z-Achse, also senkrecht zur Materialachse verlagerbar ist. Demnach kann der zumindest der größte Teil des Flachmaterials durch die Laservorrichtung bearbeitet werden.

Vorzugsweise weist ist eine Transportvorrichtung zum Handhaben des Flachmaterials vorgesehen. Die Transportvorrichtung ist vorzugsweise dazu eingerichtet, das Flachmaterial an der Halte- und/oder Spannvorrichtung bereitzustellen. Die Transportvorrichtung ist ferner vorzugsweise dazu eingerichtet, das Schnittstück und/oder den Verschnitt an der Halte- und/oder Spannvorrichtung zu greifen bzw. zu entnehmen. Demnach kann das Flachmaterial, das Schnittstück und/oder der Verschnitt sicher und wiederholbar vor und nach dem Laserschneiden gehandhabt werden.

Es ist vorteilhaft, wenn die Transportvorrichtung eine erste Handhabungsvorrichtung, insbesondere in Form eines Roboterarms, mit einem ersten Greifwerkzeug aufweist. Das erste Greifwerkzeug ist vorzugsweise als ein Unterdruck-Greifwerkzeug ausgebildet. Die erste Handhabungsvorrichtung dient zum Bereitstellen eines Flachmaterials an der Halte- und/Spannvorrichtung, indem das Flachmaterial auf die Haltevorrichtung abgelegt wird und anschließend durch die Spannvorrichtung festgesetzt wird. Zum Handhaben des Flachmaterials kann ein Unterdruck am ersten Greifwerkzeug bereitgestellt, der das Flachmaterial an die erste Handhabungsvorrichtung ansaugt. Zum Lösen des Flachmaterials von der ersten Handhabungsvorrichtung, insbesondere beim Ablegen auf die Haltevorrichtung, kann der Unterdruck abgestellt werden und vorzugsweise zusätzlich ein Überdruck bzw. Luftstoß erzeugt werden. Ferner dient die erste Handhabungsvorrichtung zum Entnehmen des wenigstens einen Schnittstücks von der Haltevorrichtung.

Es ist ferner vorteilhaft, wenn die Transportvorrichtung eine separate zur ersten Handhabungsvorrichtung ausgebildete zweite Handhabungsvorrichtung, insbesondere in Form eines SCARA-Roboterarms, mit einem zweiten Greifwerkzeug aufweist. Das zweite Greifwerkzeug ist vorzugsweise als ein Unterdruck-Greifwerkzeug ausgebildet. Die zweite Handhabungsvorrichtung dient zum Entnehmen des Verschnitts von der Halte- und/Spannvorrichtung, ein Unterdruck am zweiten Greifwerkzeug bereitgestellt, der den Verschnitt an die zweite Handhabungsvorrichtung ansaugt.

Zum Lösen des Verschnitts von der zweiten Handhabungsvorrichtung, insbesondere beim Ablegen auf die Haltevorrichtung, kann der Unterdruck abgestellt werden und vorzugsweise zusätzlich ein Überdruck bzw. Luftstoß erzeugt werden. Die zweite Handhabungsvorrichtung kann den Verschnitt nach dem Laserschneiden entfernen, sodass die erste Handhabungsvorrichtung mit dem ersten Greifwerkzeug das wenigstens eine Schnittstück aufnehmen kann. Demnach kann die erste Handhabungsvorrichtung mit dem ersten Greifwerkzeug sowohl das Flachmaterial bereitstellen, als auch das wenigstens eines Schnittstück entnehmen. Alternativ kann die Transportvorrichtung nur eine einzige Handhabungsvorrichtung mit zwei unterschiedlichen Greifwerkzeugen aufweisen, wobei die Greifwerkzeuge zum Entnehmen des Verschnitts und des Schnittstücks gewechselt werden müssen. Ferner können die unterschiedlichen Greifwerkzeuge auch gleichzeitig an einer Handhabungsvorrichtung angeordnet sein.

Eine vorteilhafte Weiterbildung sieht vor, dass die zweite Handhabungsvorrichtung bzw. das zweite Greifwerkzeug Handhabungselemente, insbesondere Düsen, aufweist. Die Handhabungselemente sind derart angeordnet, dass die Handhabungselemente nur den Verschnitt greifen. Somit verbleibt das wenigstens eine Schnittstück an der Haltevorrichtung. Es ist ferner vorteilhaft, wenn die Handhabungselemente derart angeordnet sind, dass die Handhabungselemente den Verschnitt im Bereich der Paare von Spannbacken greifen. Durch das Greifen des Verschnitts im Bereich der ersten Seite und der zweiten Seite des Flachmaterials kann sichergestellt werden, dass das wenigstens eine Schnittstück nicht verlagert wird. Ferner kann so der Verschnitt von der Spannvorrichtung freigesetzt werden und bleibt weiterhin an der zweiten Handhabungsvorrichtung sicher gegriffen.

Eine vorteilhafte Weiterbildung der Erfindung sieht vor, dass ein Magazin mit Magazinplätzen vorgesehen ist. Jeder Magazinplatz weist eine Spannvorrichtung und eine Haltevorrichtung auf. Demnach kann an jedem Magazinplatz ein Flachmaterial aufgenommen werden.

Vorzugsweise ist das Magazin derart drehbar gelagert, dass das Magazin um eine Magazinachse rotierbar ist. Das Magazin ist derart rotierbar, dass wenigstens ein Magazinplatz in wenigstens einer Bearbeitungsposition angeordnet ist und wenigstens ein Magazinplatz in wenigstens einer Ladeposition anordenbar ist. Wenn ein erster Magazinplatz in der Bearbeitungsposition angeordnet ist, ist die Halte- und/oder Spannvorrichtung unterhalb der Laservorrichtung angeordnet. Somit kann ein im ersten Magazinplatz aufgenommenes Flachmaterial mittels der Laservorrichtung bearbeitet werden. Ferner kann so gleichzeitig ein Flachmaterial im ersten Magazinplatz mittel der Laservorrichtung bearbeitet werden, während der Verschnitt und das Schnittstück aus einem zweiten Magazinplatz in der Ladeposition entnommen werden kann und dann der zweite Magazinplatz mit einem weiteren Flachmaterial bestückt werden kann. Demnach können die Rüstzeiten reduziert werden.

Es ist ferner vorteilhaft, wenn in der Ladeposition ein Behälter zur Aufnahme des Verschnitts des Flachmaterials vorgesehen ist. Wenn sich der zweite Magazinplatz in der Ladeposition angeordnet ist, ist der Behälter unterhalb der Haltevorrichtung angeordnet. Demnach kann einfach und schnell der Verschnitt entfernt und abgelegt werden. Wenn der zweite Magazinplatz den Behälter in der Ladeposition zumindest teilweise verdeckt, kann der zweite Magazinplatz in einer Zwischenposition gedreht werden, sodass der Behälter freigegeben wird.

Es ist ferner denkbar, dass wenigstens eine Sensorvorrichtung vorgesehen ist, welche dazu eingerichtet ist, zu detektieren, ob ein Flachmaterial an der Halte- und/oder Spannvorrichtung bereitgestellt ist und/oder ob das Flachmaterial und/oder das Schnittstück und/oder der Verschnitt in einer geeigneten Position zum Bearbeiten oder zum Greifen liegt.

Die der Erfindung zugrundeliegende Aufgabe wird ferner durch ein Verfahren zum Bearbeiten von entlang einer Materialebene erstreckenden Flachmaterial mit den Merkmalen des Anspruchs 12 gelöst. Das Verfahren umfasst die folgenden Schritte: Zunächst wird ein Flachmaterial bereitgestellt, indem das Flachmaterial auf einer Haltevorrichtung abgelegt wird. Die Haltevorrichtung wird aktiviert und setzt das Flachmaterial fest. Dann wird das Flachmaterial mittels einer Spannvorrichtung festgesetzt und gespannt. Somit wird eine entlang der Materialebene wirkende innere Spannung aufgebaut, welche Verwerfungen oder Überlappungen entgegenwirkt. Da das Flachmaterial zunächst gehalten und dann gespannt wird, kann sichergestellt werden, dass sich das Flachmaterial beim Spannen in einer definierten Position befindet. Im Anschluss wird wenigstens ein Schnittstück aus dem gespannten Flachmaterial mittels eines Laserstrahls geschnitten. Folglich erfolgt eine schonende und präzises Ausschneiden des Schnittstücks aus dem Flachmaterial. Beim Laserschneiden und nach dem Laserschneiden wird der Verschnitt mittels der Spannvorrichtung festgesetzt und gespannt. Beim Laserschneiden und nach dem Laserschneiden wird das wenigstens eine Schnittstück von der Haltevorrichtung gehalten. So wird sichergestellt, dass das Schnittstück auch nach dem vollständigen Lösen vom Verschnitt in einer definierten Position verbleibt.

Es ist vorteilhaft, wenn das Flachmaterial und/oder das Schnittstück mittels Unterdruck gehalten wird.

Es ist ferner vorteilhaft, wenn das Flachmaterial beim Spannen von der Haltevorrichtung angehoben wird. So kann die Haltevorrichtung, insbesondere der Unterdruck zeitweise, deaktiviert werden. Die Haltevorrichtung kann wieder angeschaltet werden, kurz bevor oder sobald wenigstens ein Schnittstück vollständig von dem Flachmaterial gelöst wurde.

Vorzugsweise wird nach dem Schneiden des Schnittstücks aus dem Flachmaterial das Schnittstück mittels einer ersten Handhabungsvorrichtung gegriffen und entnommen.

Vorzugsweise wird nach dem Schneiden des Schnittstücks aus dem Flachmaterial der Verschnitt des Flachmaterials freigegeben und mittels einer zweiten Handhabungsvorrichtung gegriffen und entnommen.

Es ist vorteilhaft, wenn nach dem Schneiden des Schnittstücks aus dem Flachmaterial zunächst der Verschnitt und dann das Schnittstück gegriffen und entnommen werden. Somit kann zum Entnehmen des Schnittstück dieselbe Handhabungsvorrichtung Verwendung finden, die zum Bereitstellen des Flachmaterials Verwendung findet.

Es ist ferner vorteilhaft, wenn das erfindungsgemäße Verfahren mittels einer erfindungsgemäßen Bearbeitungsvorrichtung ausgeführt werden.

Weitere Einzelheiten und vorteilhafte Ausgestaltungen der Erfindung sind der nachfolgenden Beschreibung zu entnehmen, anhand derer ein Ausführungsbeispiel der Erfindung weiter beschrieben und erläutert ist.

Es zeigen:
- Fig. 1: eine perspektivische Ansicht einer erfindungsgemäßen Bearbeitungsvorrichtung;
- Fig. 2: eine perspektivische Detailansicht der Bearbeitungsvorrichtung gemäß Fig. 1 mit Fokus auf ein Magazin;
- Fig. 3: eine perspektivische Ansicht eines erfindungsgemäßen Magazins;
- Fig. 4: eine Draufsicht des Magazins gemäß Fig. 3;
- Fig. 5: eine perspektivische Detailansicht der Bearbeitungsvorrichtung gemäß Fig. 1 mit Fokus auf einen Magazinplatz in einer Ladeposition;
- Fig. 6: eine perspektivische Ansicht einer ersten erfindungsgemäßen Haltevorrichtung;
- Fig. 7a: eine perspektivische Ansicht einer zweiten erfindungsgemäßen Haltevorrichtung;
- Fig. 7b: eine schematische Draufsicht auf ein Flachmaterial mit der Bewegungsbahn des Laserstrahls und den verwendeten Unterdruckvorrichtungen und Unterstützungsmodulen;
- Fig. 8: eine perspektivische Ansicht eines Paars von Spannbacken einer erfindungsgemäßen Spannvorrichtung;
- Fig. 9: eine Seitenansicht des Paars von Spannbacken gemäß Fig. 8;
- Fig. 10: eine perspektivische Oberansicht einer erfindungsgemäßen zweiten Handhabungsvorrichtung;
- Fig. 11: eine perspektivische Unteransicht der zweiten Handhabungsvorrichtung gemäß Fig. 10; und
- Fig. 12: eine schematische Darstellung der Schritte des erfindungsgemäßen Verfahrens.

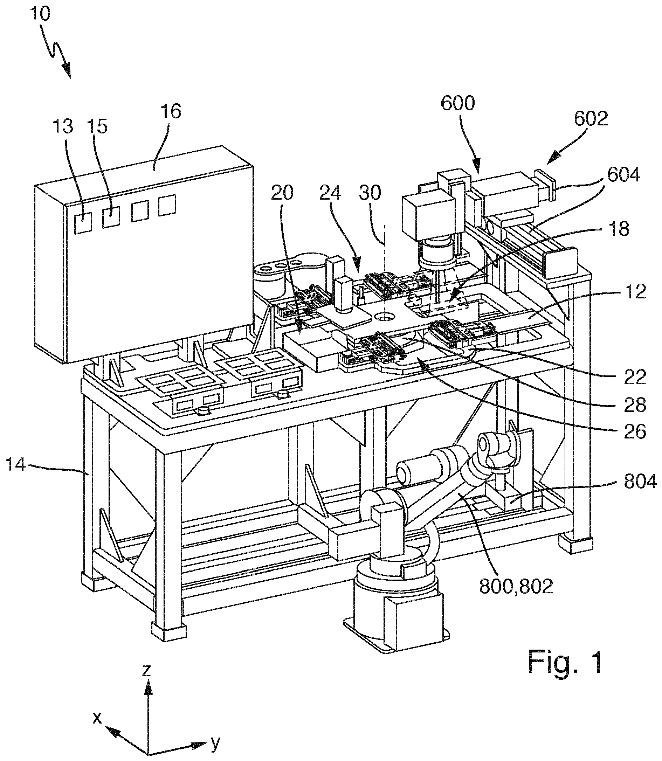

Die in den Fig. 1, 2 und 5 gezeigte Bearbeitungsvorrichtung 10 dient zur Bearbeitung von entlang einer Materialebene 11 erstreckenden Flachmaterialien 12, welche insbesondere biegeschlaf und im Wesentlichen gasundurchlässig sind.

Derartige Flachmaterialien 12 sind z.B. Papier oder Folien. Die Flachmaterialien 12 können ein- und mehrlagig ausgebildet sein, wobei das Grundmaterial und/oder das Beschichtungsmaterial aus Kunststoff oder Metall sein kann.

Insbesondere für die Akkufertigung sind Folien mit einem Grundmaterial auf Basis von Graphit und mit einem Beschichtungsmaterial auf Basis von Kupfer oder Aluminium zu fertigen. Aufgrund der geringen Dicke und biegeschlafen Eigenschaften des Flachmaterials 12 sind besondere Anforderungen an die Bearbeitungsvorrichtung 10 zu stellen.

Die Bearbeitungsvorrichtung 10 weist gemäß Fig. 1 ein Vorrichtungsgehäuse 14 und einen Schaltschrank 16 auf. Im Vorrichtungsgehäuse 14 weist die Bearbeitungsvorrichtung 10 einen Bearbeitungsbereich 18 und einen Ladebereich 20 auf. Ferner weist die Bearbeitungsvorrichtung 10 eine x-Achse X, eine senkrecht zur x-Achse X verlaufende y-Achse Y und eine senkrecht zur x- und y-Achse verlaufende z-Achse Z auf. Im beladenen Zustand verläuft die Materialebene 11 des Flachmaterials 12 parallel zur x-Achse und zur y-Achse.

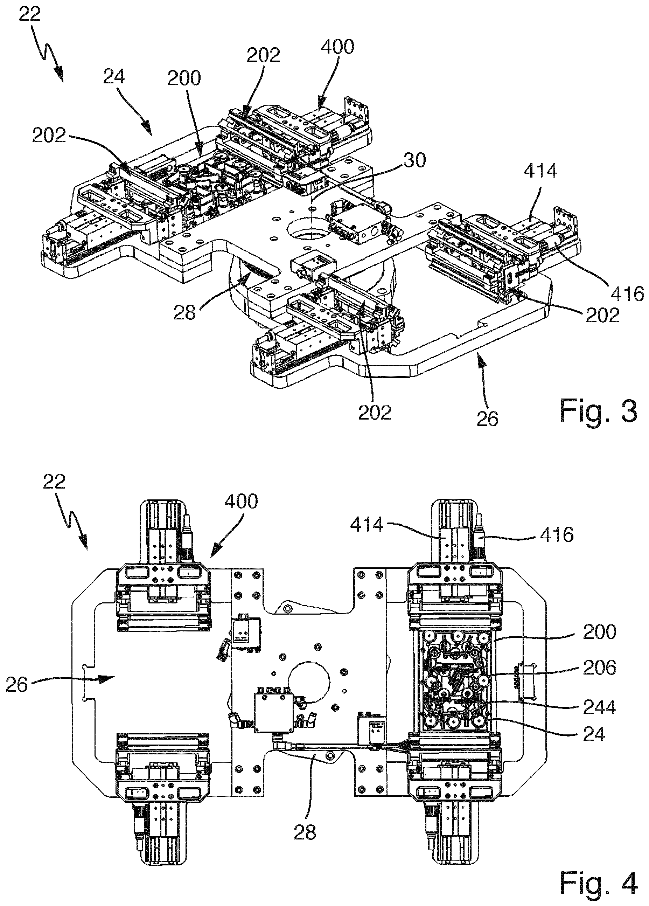

Die Bearbeitungsvorrichtung 10 weist gemäß der Fig. 1-5 ein Magazin 22 mit einem ersten Magazinplatz 24 und einem zweiten Magazinplatz 26 auf. Das Magazin 22 ist mittels eines Drehantriebs 28 um eine parallel zur z-Achse verlaufende Magazinachse 30 rotierbar, sodass jeweils ein Magazinplatz 24, 26 in einer Bearbeitungsposition in den Bearbeitungsbereich 18 und der andere Magazinplatz 24, 26 in eine Ladeposition in den Ladebereich 20 verschwenkbar ist. Die Bearbeitungsposition und die Ladeposition sind entlang der y-Achse einander gegenüberliegend angeordnet. Ferner ist das Magazin 22 derart rotierbar, dass sowohl der erste Magazinplatz 24 als auch der zweite Magazinplatz 26 außerhalb des Bearbeitungsbereich 18 und außerhalb des Ladebereichs 20 in einer Zwischenposition verschwenkbar sind.

Jeder Magazinplatz 24, 26 weist eine Haltevorrichtung 200 und eine Spannvorrichtung 400 auf. Demnach wird die Haltevorrichtung 200 und die Spannvorrichtung 400 mit dem zugehörigen Magazinplatz 24, 26 in die Bearbeitungsposition, die Ladeposition oder Zwischenposition mit verschwenkt.

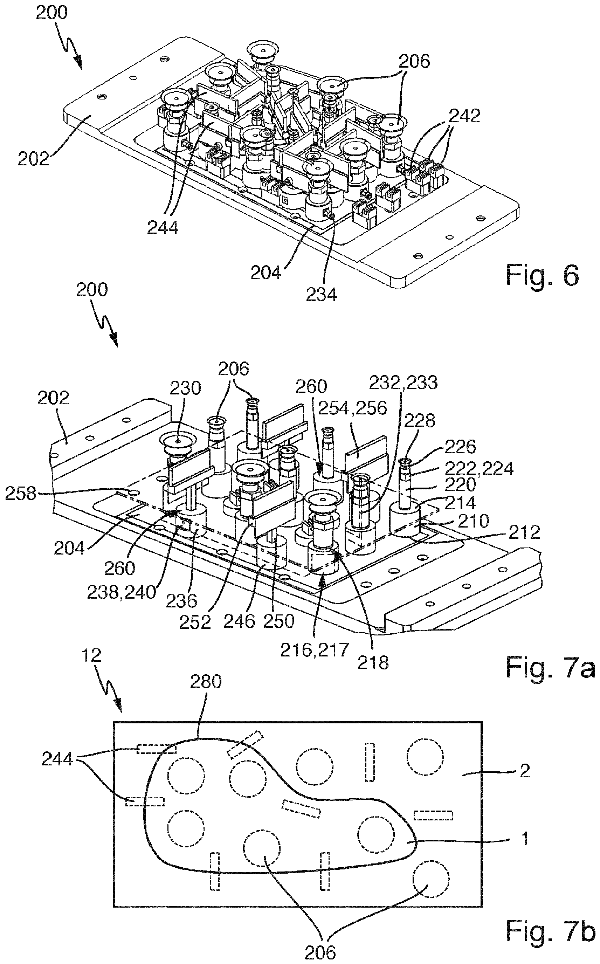

Die jeweilige Haltevorrichtung 200 gemäß Fig. 6 und 7 bildet einen Boden 32 des zugehörigen Magazinplatzes 24, 26. Die Spannvorrichtung 400 ist entlang der x-Achse seitlich am Magazinplatz 24, 26 angeordnet und bildet demnach einen seitlichen Randbereich 34 des zugehörigen Magazinplatzes 24, 26.

Die Haltevorrichtung 200 weist gemäß Fig. 6 und 7 eine Grundplatte 202 und eine in der Grundplatte 202 angeordnete Arbeitsplatte 204 auf. Die Arbeitsplatte 204 umfasst ein ferromagnetisches Material, vorzugsweise Eisen. Die Grundplatte 202 und/oder die Arbeitsplatte 204 weisen vorzugsweise entlang der x-Achse und der y-Achse die äußeren Maße des zu bearbeitenden Flachmaterials 12 auf. Auf der Arbeitsplatte 204 sind eine Vielzahl von magnetischen Unterdruckvorrichtungen 206 vorgesehen.

Nach Fig. 6 und 7 sind die Unterdruckvorrichtungen 206 vorzugsweise kreiszylinderförmig ausgebildet, erstrecken sich entlang der z-Achse und weisen jeweils einen Grundsockel 210 mit einer Sockelunterseite 212 und einer Sockeloberseite 214 auf. An der Sockelunterseite 212 ist eine Magnetaufnahme 216 zur lösbaren Aufnahme eines Dauermagneten 217 vorgesehen. Mittels des Dauermagneten 217 kann die Unterdruckvorrichtung 206 beliebig auf der Arbeitsplatte 204 angeordnet und fixiert werden, wobei dabei das ferromagnetische Material in der Arbeitsplatte 204 mit dem Dauermagneten 217 zusammenwirkt. An der Sockeloberseite 214 weist der Grundsockel 210 eine Adapteraufnahme 218 zur lösbaren Aufnahme eines Adapterstücks 220 auf. Das Adapterstück 220 weist an einer der Adapteraufnahme 218 gegenüberliegende Adapteroberseite 222 eine Düsenschnittstelle 224 zur Anbindung eines Düsenkopfs 226 an. Je nach Düsenkopf 226 kann eine unterschiedliche Größe des Adapterstücks 220 gewählt werden. Der Düsenkopf 226 weist an einer dem Adapterstück 220 gegenüberliegenden Düsenoberseite 228 einen Leitungsausgang 230 auf.

Der Grundsockel 210, das Adapterstück 220 und der Düsenkopf 226 weisen jeweils im Inneren einen Hohlraum 232 auf, welche eine Leitung 233 bilden. Die Leitung 233 verbindet einen am Grundsockel 210 angeordneten Leitungseingang 234 fluidisch mit dem Leitungsausgang 230. Der Grundsockel 210 weist in einer parallel zur z-Achse verlaufende Sockelmantelfläche 236 eine Leitungsausnehmung 238 mit einem ebenen Ausnehmungsboden 240 auf. Demnach ist der Leitungseingang 234 an einem ebenen Ausnehmungsboden 240 angeordnet.

An dem Leitungseingang 234 kann eine nicht dargestellte Unterdruckversorgung angeschlossen werden. Zur Verbindung der Unterdruckversorgung mit den Unterdruckvorrichtungen 206 können nicht dargestellte Leitungsschläuche Verwendung finden, wobei zur Fixierung der Leitungsschläuche an der Grundplatte 202 und/oder der Arbeitsplatte 204 Schlauchklemmen 242 vorgesehen sind. Die Schlauchklemmen 242 können an der Grundplatte 202 in vorgefertigte Bohrungen angeschraubt werden oder analog zur Unterdruckvorrichtung 206 mittels eines nicht dargestellten Dauermagneten beliebig auf der Arbeitsplatte 204 angeordnet und fixiert werden. Mittels der Unterdruckversorgung und der Leitung 233 kann ein Unterdruck am Leitungsausgang 230 gebildet werden, mithilfe dessen das auf der Haltevorrichtung 200 abgelegte Flachmaterial 12 angesaugt und gehalten werden kann.

Zur Verbesserung der Haltefähigkeit der Haltevorrichtung 200 ist es sinnvoll möglichst viele Unterdruckvorrichtungen 206 vorzusehen, sodass sowohl das Flachmaterial 12 als auch Schnittstück 1 sicher gehalten werden kann. Jedoch steht dem entgegen, dass das Flachmaterial 12 mittels eines Lasers bearbeitet wird und die Unterdruckvorrichtungen 206 durch den Laser verschlissen werden. Aus diesem Grund sind neben den Unterdruckvorrichtungen 206 eine Vielzahl von magnetischen Unterstützungsmodulen 244 vorgesehen. Die Unterstützungsmodule 244 dienen als Verschleißteile. Die Unterstützungsmodule 244 weisen einen Modulsockel 246, einen am Modulsockel 246 angeordneten Modulsteg 250 und eine am Modulsteg 250 angeordnete Bürstenaufnahme 252 auf. Der Modulsockel 246 ist entsprechend dem Grundsockel 210 ausgebildet und weist ebenfalls einen Dauermagneten auf, sodass die Unterstützungsmodule 244 beliebig auf der Arbeitsplatte 204 anordenbar sind.

Die Bürstenaufnahme 252 erstreckt sich entlang der x-Achse oder der y-Achse und weist eine Vielzahl von Bürstenhaaren 254 auf, wobei die Bürstenhaare 254 eines Unterstützungsmoduls 244 eine Bürste 256 bilden. Die Bürste 256 erstreckt sich ebenfalls entlang der x-Achse oder der y-Achse, wobei durch die Bürste 256 ebenfalls das Flachmaterial 12 oder das Schnittstück 1 gehalten werden kann. Die Bürste 256 umfasst eine Vielzahl von Bürstenhaaren 254, wobei die Bürstenhaare 254 in Kontakt mit dem Laserstrahl kommen kann. In dem Fall werden zwar wenige Bürstenhaare 254 zerstört, jedoch verliert die Bürste 256 in Summe nicht die Haltefähigkeit aufgrund der weiteren Bürstenhaare 254. Nach mehreren Schneidevorgängen kann die Bürste 256 einfach, günstig und schnell ausgetauscht werden. Demnach können die Unterdruckvorrichtungen 206 so auf der Arbeitsplatte 204 angeordnet werden, dass diese nicht in der Bahn des Laserstrahls angeordnet sind, und die Unterstützungsmodule 244 so angeordnet werden, dass diese zwar in der Bahn des Laserstrahls angeordnet sind. Die Kombination von Unterdruckvorrichtungen 206 und Unterstützungsmodulen 244 ergibt demnach eine optimale Balance zwischen Haltefähigkeit und Langlebigkeit der Haltevorrichtung 200.

Die Fig. 6 und 7 unterscheiden sich hinsichtlich der Anzahl und Anordnung der Unterdruckvorrichtungen 206, der Unterstützungsmodule 244 und der Schlauchklemmen 242.

Ferner ist in Fig. 7a eine Bewegungsbahn 280 eines Laserstrahls gezeigt, welche auch der Außenkontur eines Schnittstücks 1 entspricht. Ferner sind gestrichelt Unterdruckvorrichtungen 206 und Unterstützungsmodule 244 gezeigt. Es ist ersichtlich, dass die Bewegungsbahn 280 des Laserstrahls die Unterdruckvorrichtung 206 nicht kreuzt, jedoch die Unterstützungsmodule 244 kreuzen kann. Aufgrund der Verteilung ist gewährleistet, dass vor dem Schnitt das Flachmaterial 12 und nach dem Schnitt das Schnittstück 1 und der Verschnitt 2 sicher mittels der Haltevorrichtung 200 gehalten wird.

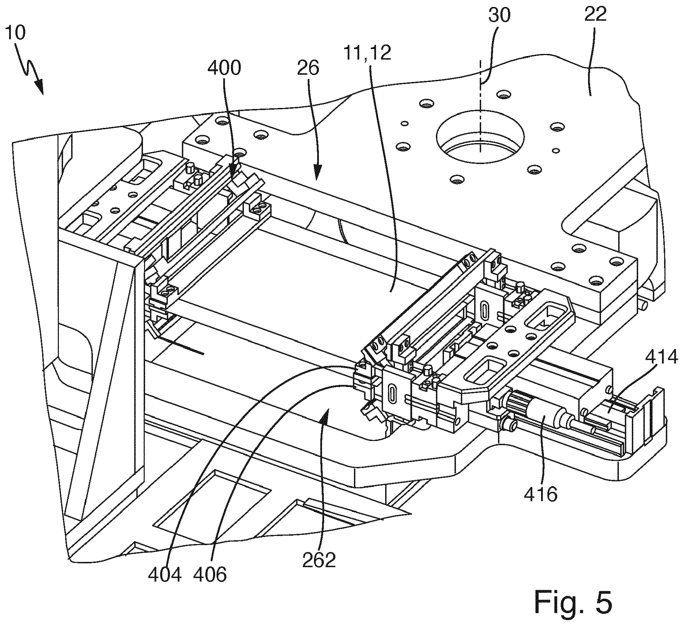

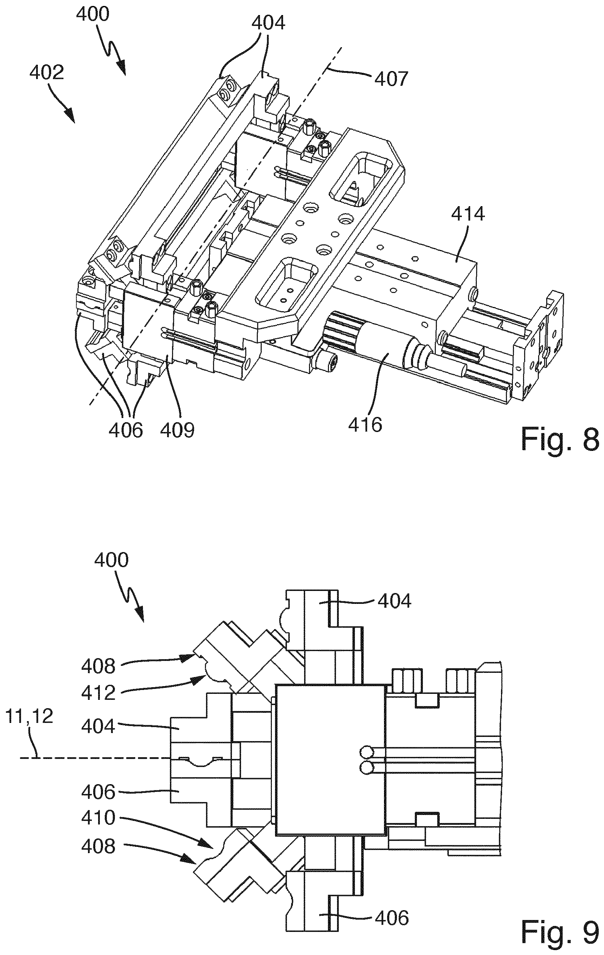

Die Spannvorrichtung 400 umfasst gemäß Fig. 5, 8 und 9 zwei gegenüberliegende Paare von Spannbacken 402, wobei jedes Paar von Spannbacken 402 eine obere Spannbacke 404 und eine untere Spannbacke 406 aufweist. Die obere Spannbacke 404 und die untere Spannbacke 406 sind jeweils um eine gemeinsame Spannrotationsachse 407 mittels jeweils eines Spannrotationsantriebs 409 zwischen einer Öffnungsstellung und einer Schließstellung rotierbar verlagerbar. In der Öffnungsstellung ist ein Flachmaterial 12 in die Spannvorrichtung 400 einlegbar und in der Schließstellung ist das Flachmaterial 12 in der Spannvorrichtung 400 festgesetzt und gespannt. In den Fig. 8 und 9 ist die Öffnungsstellung (parallel zur z-Achse), die Schließstellung (parallel zur x-Achse) und eine Zwischenstellung (45° zur x-Achse) der Spannbacken 404, 406 dargestellt, wobei die obere Spannbacke 404 nach oben in die Öffnungsstellung verschwenkt und die untere Spannbacke 406 nach unten in die Öffnungsstellung verschwenkt.

Zur Realisierung der Spannung des Flachmaterials 12 weist gemäß Fig. 9 jeweils eine Spannbacke 404, 406 eine Spannfläche 408 mit einer Flächenausnehmung 410 und die jeweils die andere Spannbacke 404, 406 ein gegenüber der Spannfläche 408 vorstehendes Spannelement 412 auf. In der Schließstellung wird das Spannelement 412 zumindest teilweise von der Flächenausnehmung 410 aufgenommen. Vorzugsweise ist die Flächenausnehmung 410 (konkav) komplementär zum Spannelement 412 (konvex) ausgebildet. Aufgrund des längeren Weges den das Flachmaterial 12 beim Festsetzen in der Spannvorrichtung 400 zurücklegt, wird das Flachmaterial 12 beim Festsetzen gleichzeitig für die Bearbeitung gespannt.

Zusätzlich kann die Spannvorrichtung 400 gemäß Fig. 8 entlang einer Spannlinearachse 414 mittels eines Spannlinearantriebs 416 zwischen einer Nahestellung und einer Fernstellung verlagerbar ausgebildet sein. In der Nahestellung werden das Paar von Spannbacken 402 zum Flachmaterial 12 verlagert, um die Spannung des festgesetzten Flachmaterials 12 zu verringern. In der Fernstellung werden das Paar von Spannbacken 402 von dem Flachmaterial 12 weg verlagert, um die Spannung des festgesetzten Flachmaterials 12 zu vergrößern.

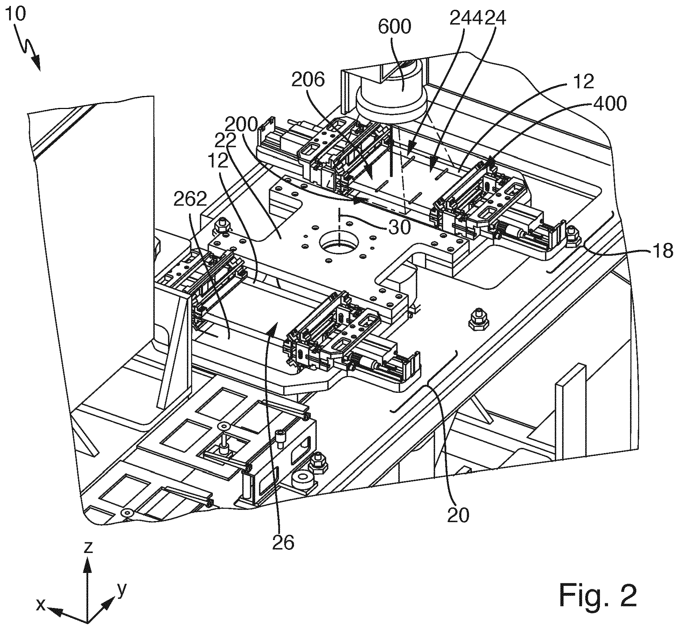

Im Bearbeitungsbereich 18 weist gemäß Fig. 1 und 2 die Bearbeitungsvorrichtung 10 eine Laservorrichtung 600 auf. Die Laservorrichtung 600 ist derart eingerichtet, dass ein durch die Laservorrichtung 600 emittierter, im Wesentlichen parallel zur z-Achse verlaufender Laserstrahl auf das Flachmaterial 12 gerichtet ist und es an einem Auftreffpunkt zu einem Energieeintrag in das Flachmaterial 12 kommt, sodass das Flachmaterial an dem Auftreffpunkt in ein Schnittstück 1 und ein Verschnitt 2 zugeschnitten werden kann. Das Schnittstück 1 ist das letztlich zu erzeugende Produkt. Der Laserstrahl kann vorzugsweise über einen Arbeitsbereich bewegt werden, wobei der Arbeitsbereich im Wesentlichen der Längs- und Querstreckung des Flachmaterials 12 entspricht. Die Laservorrichtung 600 weist vorzugsweise ein Achssystem 602 zum Verlagern des Laserstrahls entlang der x-Achse mittels einer ersten Linearachse 604 und entlang der y-Achse mittels einer zweiten Linearachse 606 auf. Ferner ist denkbar, dass das Achssystem 602 eine nicht dargestellte dritte Linearachse zum Verlagern entlang der z-Achse aufweist.

Zur Verbesserung der Sicherheit kann die Haltevorrichtung 200 gemäß Fig. 7 eine Schutzplatte 258 aufweisen. Die Schutzplatte 258 dient dazu, die Haltevorrichtung 200 vor dem Laserstrahl zu schützen. Die Schutzplatte 258 kann vorzugsweise an den Unterdruckvorrichtungen 206 und/oder den Unterstützungsmodulen 244 angeordnet sein.

Vorzugsweise weist die Schutzplatte 258 ein Raster mit Rasterausnehmungen 260 auf, wobei die Unterdruckvorrichtungen 206 und/oder die Unterstützungsmodule 244 in den Rasterausnehmungen 260 anordenbar sind. Die Schutzplatte 258 kann vorgefertigt werden und an den Rasterausnehmungen 260 können dann die Unterdruckvorrichtungen 206 und/oder die Unterstützungsmodule 244 auf der Arbeitsplatte 204 positioniert werden. Die Rasterausnehmungen 260 können der Außenkontur der Grundsockel 210 und Modulsockel 246 oder der Außenkontur der Adapterstücke 220 und Modulstege 250 entsprechen. Die Schutzplatte 258 kann vorzugsweise auf dem Grundsockel 210 und dem Modulsockel 246 abgestützt werden und ist somit beabstandet zur Arbeitsplatte 204 angeordnet.

Zum Bereitstellen des Flachmaterials 12 und zum Entnehmen des Schnittstücks 1 im Ladebereich 20 sowie zum Entnehmen des Verschnitts 2 im Ladebereich 20 weist die Bearbeitungsvorrichtung 10 eine Transportvorrichtung 800 auf. Die Bearbeitungsvorrichtung 800 weist gemäß Fig. 1 eine erste Handhabungsvorrichtung 802 mit einem ersten Unterdruck-Greifwerkzeug 804 auf. Mittels Unterdruck wird das Flachmaterial 12 an die erste Handhabungsvorrichtung 802 angesaugt und auf der Haltevorrichtung 200 abgelegt.

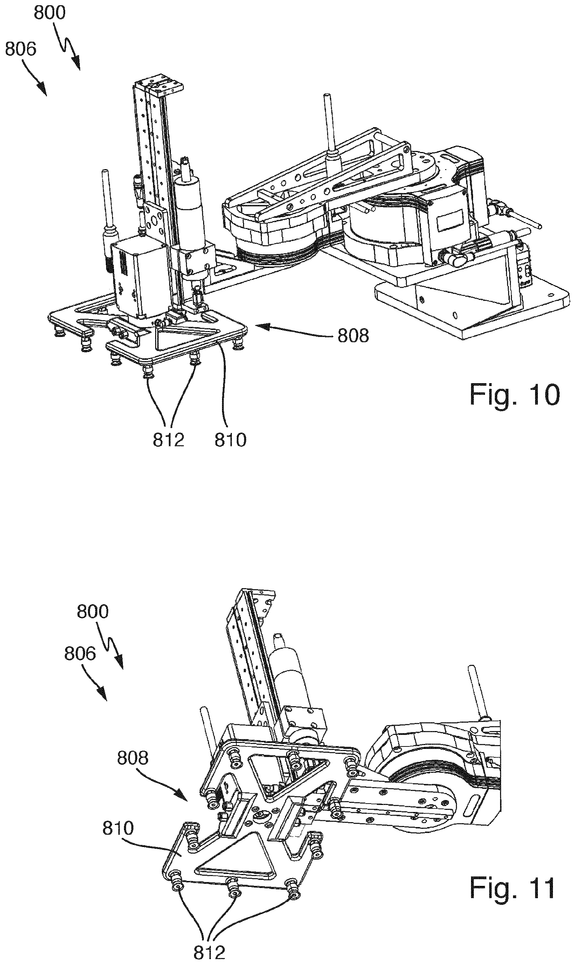

Nach dem Laserschneiden des Flachmaterials 12 im Bearbeitungsbereich 18 wird das Magazin 22 rotiert, sodass das bearbeitete Flachmaterial 12, insbesondere das voneinander getrennte Schnittstück 1 und den restlichen Verschnitt 2, in den Ladebereich 20 bewegt wird. Zum Entnehmen des Verschnitts aus dem Ladebereich 20 weist die Transportvorrichtung 800 eine zweite Handhabungsvorrichtung 806 mit einem zweiten Unterdruck-Greifwerkzeug 808 gemäß Fig. 10 und 11 auf. Mittels Unterdruck wird das Flachmaterial 12 an die zweite Handhabungsvorrichtung 806 angesaugt und so von der Haltevorrichtung 200 im Ladebereich 20 entnommen. Dazu weist das zweite Unterdruck-Greifwerkzeug 808 eine Druckverteilungsplatte 810 und an der Druckverteilungsplatte 801 angeordnete Handhabungselemente 812, insbesondere in Form von Düsen, auf. Die Handhabungselemente 812 sind derart angeordnet, dass die Handhabungselemente 812 nur den Verschnitt greifen. Dazu sind die Handhabungselements 812 entlang der Außenkontur der Druckverteilungsplatte 810 angeordnet. Somit verbleibt das wenigstens eine Schnittstück 1 an der Haltevorrichtung 200. Sobald der Verschnitt durch die zweite Handhabungsvorrichtung 806 gegriffen ist, kann die Spannvorrichtung 400 in Löseposition verlagert werden. Unterhalb des Ladebereichs 20 ist ferner ein Behälter 262 zur Aufnahme des Verschnitts 2 angeordnet.

Es verbleibt nur das Schnittstück 1 auf der Haltevorrichtung 200, sodass mittels der ersten Handhabungsvorrichtung 802 das Schnittstück 1 entnommen werden kann.

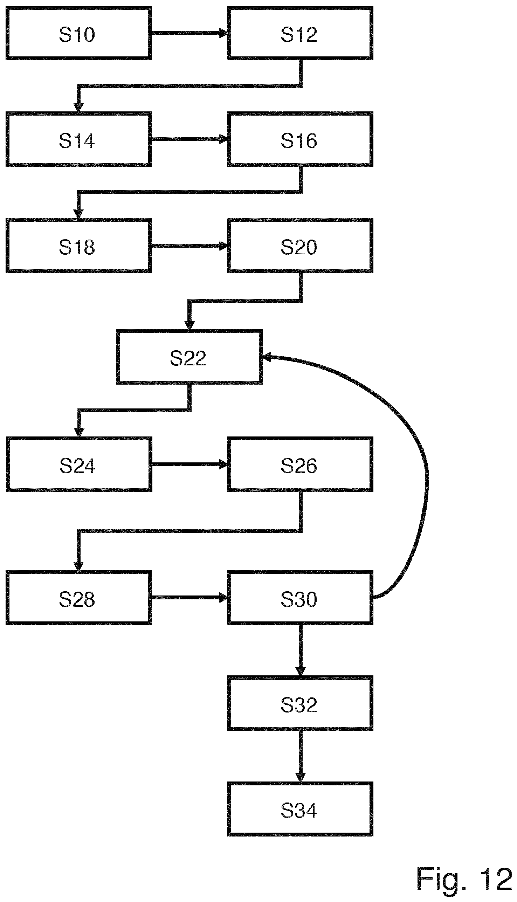

Ferner ist nachfolgend das Verfahren zum Betrieb der Bearbeitungsvorrichtung 10 anhand Fig. 12 beschrieben.

Der Bearbeitungsvorrichtung 10 werden Informationen über Eigenschaften des Flachmaterials 12 und die Außenkontur der Schnittstücke 1 bereitgestellt (S10). Ferner wird vorzugsweise eine Schutzplatte 258 ohne Rasterausnehmungen 260 im Bearbeitungsbereich 18 bereitgestellt (S12). Die Bearbeitungsvorrichtung 10 weist vorzugsweise eine Steuerung 13 und einen Speicher 15 auf, um unter anderem die Bewegungsbahn 280 des Laserstrahls zu bestimmen und zu speichern (S14). In Abhängigkeit der Bewegungsbahn 280 des Laserstrahls wird die Position der Unterdruckvorrichtungen 206 und/oder der Unterstützungsmodule 244 vorzugsweise bestimmt, wobei zum einen das Flachmaterial 12 und das wenigstens eine Schnittstück 1 sicher gehalten werden soll und zum anderen die Bewegungsbahn 280 nicht entlang der Unterdruckvorrichtungen 206 verlaufen soll (S16). An den bestimmten Positionen der Unterdruckvorrichtungen 206 und/oder der Unterstützungsmodule 244 werden vorzugsweise mittels der Laservorrichtung 600 Rasterausnehmungen 260 in die Schutzplatte 258 eingearbeitet (S18). Mittels der Rasterausnehmungen 260 können händisch die Unterdruckvorrichtungen 206 und/oder die Unterstützungsmodule 244 positioniert werden. Alternativ ist es denkbar, dass die Transportvorrichtung 800 die Unterdruckvorrichtungen 206 und/oder die Unterstützungsmodule 244 auf der Arbeitsplatte 204 setzen kann (S20).

Im Anschluss wird mittels der ersten Handhabungsvorrichtung 802 ein zu bearbeitendes Flachmaterial 12 auf die Haltevorrichtung 200 des Magazinplatzes 24, 26 abgelegt, die in der Ladeposition angeordnet ist (S22). Das auf der Haltevorrichtung 200 abgelegte Flachmaterial 12 wird durch die Spannvorrichtung 400 ergriffen, festgesetzt und gleichzeitig gespannt (S24). Dann wird das Magazin 22 verschwenkt, sodass der beladene Magazinplatz 24, 26 mit dem gespannten Flachmaterial 12 in den Bearbeitungsbereich 18 gebracht wird (S26).

Nun kann die Laservorrichtung 600 einen Laserstrahl erzeugen, welcher sich entlang der vorbestimmten Bewegungsbahn 280 bewegt. Bei Abschluss des Laserschneidens ist das wenigstens eine Schnittstück 1 von dem Verschnitt 2 des Flachmaterials 12 getrennt (S28). Während des Laserschneidens kann gleichzeitig am gegenüberliegenden Magazinplatz 24, 26 ein bearbeitetes Flachmaterial 12 entnommen und ein weiteres zu bearbeitendes Flachmaterial 12 bereitgestellt werden (S30).

Nach einem weiteren Rotieren des Magazins 22 wird das zu bearbeitende Flachmaterial 12 in den Bearbeitungsbereich 18 und das bearbeitete Flachmaterial in der Ladebereich 20 verschwenkt. Während im Bearbeitungsbereich 18 das weitere Flachmaterial 12 lasergeschnitten wird (S28), kann das bearbeitete Flachmaterial 12 entnommen werden, damit der Magazinplatz 24, 26 mit einem neuen Flachmaterial 12 bestückt werden kann (S30). Dazu wird zunächst mittels der zweiten Handhabungsvorrichtung 806 der Verschnitt 2 entfernt und in dem Behälter 262 abgelegt (S32). Es ist denkbar, dass zum Ablegen des Verschnitts in den Behälter 262 sich die Magazinplätze 24, 26 in einer Zwischenposition befinden müssen, um den Behälter 262 freizugeben. Im Anschluss wird mittels der ersten Handhabungsvorrichtung 802 das Schnittstück 1 entnommen und zum nächsten Fertigungsort transportiert (S34).

### Bezugszeichenliste

- X: x-Achse
- Y: y-Achse
- Z: z-Achse

- 1: Schnittstück
- 2: Verschnitt
- 10: Bearbeitungsvorrichtung
- 11: Materialebene
- 12: Flachmaterial
- 13: Steuerung
- 14: Vorrichtungsgehäuse
- 15: Speicher
- 16: Schaltschrank
- 18: Bearbeitungsbereich
- 20: Ladebereich
- 22: Magazin
- 24: erster Magazinplatz
- 26: zweiter Magazinplatz
- 28: Drehantrieb
- 30: Magazinachse
- 32: Boden
- 34: Randbereich
- 200: Haltevorrichtung
- 202: Grundplatte
- 204: Arbeitsplatte
- 206: Unterdruckvorrichtung
- 210: Grundsockel
- 212: Sockelunterseite
- 214: Sockeloberseite
- 216: Magnetaufnahme
- 217: Dauermagnet
- 218: Adapteraufnahme
- 220: Adapterstück
- 222: Adapteroberseite
- 224: Düsenschnittstelle
- 226: Düsenkopf
- 258: Schutzplatte
- 228: Düsenoberseite
- 230: Leitungsausgang
- 232: Hohlraum
- 233: Leitung
- 234: Leitungseingang
- 236: Sockelmantelfläche
- 238: Leitungsausnehmung
- 240: Ausnehmungsboden
- 242: Schlauchklemme
- 244: Unterstützungsmodul
- 246: Modulsockel
- 250: Modulsteg
- 252: Bürstenaufnahme
- 254: Bürstenhaare
- 256: Bürste
- 260: Rasterausnehmung
- 262: Behälter
- 280: Bewegungsbahn
- 400: Spannvorrichtung
- 402: Paar von Spannbacken
- 404: erste Spannbacke
- 406: zweite Spannbacke
- 407: Spannrotationsachse
- 408: Spannfläche
- 409: Spannrotationsantrieb
- 410: Flächenausnehmung
- 412: Spannelement
- 414: Spannlinearachse
- 416: Spannlinearantrieb
- 600: Laservorrichtung
- 602: Achssystem
- 604: Linearachse
- 800: Transportvorrichtung
- 802: erste Handhabungsvorrichtung
- 804: erstes Greifwerkzeug
- 806: zweite Handhabungsvorrichtung
- 808: zweites Greifwerkzeug
- 810: Druckverteilungsplatte
- 812: Handhabungselement

## Patentansprüche

1. Bearbeitungsvorrichtung (10) zur Bearbeitung von entlang einer Materialebene (11) erstreckenden Flachmaterial (12), die Bearbeitungsvorrichtung (10) umfassend:
- wenigstens eine Haltevorrichtung (200) zum Halten des Flachmaterials (12),
- wenigstens eine Spannvorrichtung (400) zum Festsetzen des Flachmaterials (12) und zum Spannen des Flachmaterials (12) entlang der Materialebene (11),
- wenigstens eine Laservorrichtung (600) zum Schneiden von wenigstens einem Schnittstück (1) aus dem Flachmaterial (12),
wobei die Haltevorrichtung (200) derart ausgebildet ist, dass nach dem Laserschnitt das wenigstens eine Schnittstück (1) durch die Haltevorrichtung (200) gehalten wird.

2. Bearbeitungsvorrichtung (10) nach Anspruch 1, wobei die Haltevorrichtung (200) als eine Unterdruck-Haltevorrichtung (200) zum Ansaugen des Flachmaterials (12) ausgebildet ist.

3. Bearbeitungsvorrichtung (10) nach Anspruch 1 oder 2, wobei die Spannvorrichtung (400) wenigstens zwei gegenüberliegende Paare von Spannbacken (22) zum Festsetzen und/oder zum Spannen jeweils einer Seite des Flachmaterials (12) aufweist.

4. Bearbeitungsvorrichtung (10) nach einem der vorherigen Ansprüche, wobei die Laservorrichtung (600) wenigstens entlang einer x-Achse (X) und einer y-Achse (Y) verlagerbar sind, wobei die x-Achse (X) und die y-Achse (Y) im festgesetzten Zustand des Flachmaterials (12) parallel zur Materialebene (11) verlaufen.

5. Bearbeitungsvorrichtung (10) nach einem der vorherigen Ansprüche, wobei eine Transportvorrichtung (800) zum Bereitstellen des Flachmaterials (12) an der Haltevorrichtung (200) und/oder Spannvorrichtung (400) und/oder zum Entnehmen des Schnittstücks (1) und/oder Verschnitts (2) aus der Haltevorrichtung (200) und/oder Spannvorrichtung (400) vorgesehen ist.

6. Bearbeitungsvorrichtung (10) nach Anspruch 5, wobei die Transportvorrichtung (800) eine erste Handhabungsvorrichtung (802) zum Auflegen des Flachmaterials (12) auf die Haltevorrichtung (200) und/oder zum Entnehmen des wenigstens einen Schnittstücks (1) aus der Haltevorrichtung (200) aufweist.

7. Bearbeitungsvorrichtung (10) nach Anspruch 5 oder 6, wobei die Transportvorrichtung (800) eine zweite Handhabungsvorrichtung (806) zum Entnehmen des Verschnitts (2) des Flachmaterials (12) aus der Haltevorrichtung (200) aufweist.

8. Bearbeitungsvorrichtung (10) nach Anspruch 7, wobei die zweite Handhabungsvorrichtung (806) Handhabungselemente (812) aufweist, wobei die Handhabungselemente (812) derart angeordnet sind, dass die Handhabungselemente (812) den Verschnitt (2) und nicht das wenigstens eine Schnittstück (1) greifen.

9. Bearbeitungsvorrichtung (10) nach einem der vorherigen Ansprüche, wobei ein Magazin (22) mit Magazinplätzen (24, 26) vorgesehen ist, wobei jeder Magazinplatz (24, 26) eine Spannvorrichtung (400) und insbesondere eine Haltevorrichtung (200) aufweist.

10. Bearbeitungsvorrichtung (10) nach Anspruch 9, wobei das Magazin (22) derart um eine Magazinachse (30) rotierbar ist, dass die Magazinplätze (24, 26) in wenigstens einer Bearbeitungsposition und in wenigstens einer Ladeposition anordenbar sind, wobei ein erster Magazinplatz (24) in der Bearbeitungsposition unterhalb der Laservorrichtung (600) angeordnet ist.

11. Bearbeitungsvorrichtung (10) nach Anspruch 10, wobei ein zweiter Magazinplatz (26) in der Ladeposition oberhalb eines Behälters (262) zur Aufnahme des Verschnitts (2) des Flachmaterials (12) vorgesehen ist.

12. Verfahren zum Bearbeiten von entlang einer Materialebene (11) erstreckenden Flachmaterial (12), umfassend folgende Schritte:
a) Bereitstellen wenigstens eines Flachmaterials (12) auf einer Haltevorrichtung (200);
b) Halten des Flachmaterials (12) mittels der Haltevorrichtung (200);
c) Spannen des Flachmaterials (12) entlang der Materialebene (11) mittels einer Spannvorrichtung (400) ;
d) Schneiden von wenigstens einem Schnittstück (1) aus dem Flachmaterial (12) mittels eines Laserstrahls,
wobei beim und nach dem Laserschneiden Verschnitt (2) des Flachmaterials mittels der Spannvorrichtung (400) festgesetzt und gespannt ist, und
wobei nach dem Laserschneiden zumindest das wenigstens eine Schnittstück (1) von der Haltevorrichtung (200) gehalten wird.

13. Verfahren nach Anspruch 12, wobei das Flachmaterial (12) und/oder das Schnittstück (1) mittels Unterdruck gehalten wird.

14. Verfahren nach Anspruch 12 oder 13, wobei das Flachmaterial (12) mit dem Spannen gemäß Schritt c) von der Haltevorrichtung (200) gelöst wird.

15. Verfahren nach einem der Ansprüche 12 bis 14, wobei nach dem Schneiden des Schnittstücks (1) aus dem Flachmaterial (12) gemäß Schritt d) das Schnittstück (1) mittels einer ersten Handhabungsvorrichtung (802) gegriffen und entnommen wird.

16. Verfahren nach einem der Ansprüche 12 bis 15, wobei nach dem Schneiden des Schnittstücks aus dem Flachmaterial (12) gemäß Schritt d) der Verschnitt (2) des Flachmaterials (12) freigegeben wird und mittels einer zweiten Handhabungsvorrichtung (806) gegriffen und entnommen wird.

17. Verfahren nach einem der Ansprüche 12 bis 16, wobei nach dem Schneiden des Schnittstücks (1) aus dem Flachmaterial (12) gemäß Schritt d) zunächst der Verschnitt (2) und dann das Schnittstück (1) gegriffen und entnommen werden.

18. Verfahren nach einem der Ansprüche 12 bis 17 mittels einer Bearbeitungsvorrichtung (10) nach einem der Ansprüche 1 bis 11.
